# EUROPEAN PATENT SPECIFICATION

(11) **EP 2 118 591 B1**
(45) Date of publication and mention of the grant of the patent: **29.11.2017**
(21) Application number: 07823104.0
(22) Date of filing: 12.10.2007
(51) Int. Cl.: F25B 43/00

(54) **APPARATUS AND METHOD FOR SEPARATING DROPLETS FROM VAPORIZED REFRIGERANT**
VORRICHTUNG UND VERFAHREN ZUM TRENNEN VON TRÖPFCHEN VON VERDAMPFTEM KÄLTEMITTEL
DISPOSITIF ET PROCÉDÉ DE SÉPARATION DE GOUTTELETTES D'UN RÉFRIGÉRANT VAPORISÉ

(30) Priority: 16.10.2006 FI 20060915
(43) Date of publication of application: 18.11.2009
(73) Proprietor: VAHTERUS OY, 23600 Kalanti (FI)
(72) Inventor: SONNINEN, Jyrki, 21260 Raisio (FI)
(74) Representative: Berggren Oy, Turku
(86) International application number: PCT/FI2007/000243
(87) International publication number: WO 2008/046951

(56) References cited:
- EP-A- 1 363 090
- JP-A- 62 119 375
- JP-A- 2005 265 388
- US-A- 1 715 828
- US-A- 1 994 037
- US-A- 2 156 426
- US-A- 2 277 647
- US-A- 2 570 962
- US-A- 2 859 596
- US-A- 4 232 533

## Description

### TECHNICAL FIELD OF THE INVENTION

The object of the invention is an apparatus and a method for separating droplets from vaporized refrigerant according to the preambles of the independent claims presented below. The invention relates especially to a new droplet separator, which ensures that refrigerant droplets are not carried to the compressor, which is used in the refrigerating machinery.

### PRIOR ART

One important application of plate heat exchangers is a so-called flooded evaporator, which is used in large refrigerating machineries, and a droplet separator associated therewith. The task of the droplet separator is to ensure that refrigerant droplets are not carried to the compressor of the refrigerating machinery. Droplets are extremely harmful, since they easily cause the compressor to break down. The droplet separator has to be dimensioned large enough and the distance between the suction and outlet opening adequate, so that the droplets have time to fall to the bottom of the separator before the end up in the compressor along with the suction gas. On the other hand the large size of the separator increases the production costs and the mass of the system, and the space it requires is large.

The document US 1715828 discloses refrigeration system, wherein droplets are separated with baffle plates in a separation vessel. The gas-liquid separator systems are also disclosed in the documents JP2005265388 and JP62119375.

### OBJECT AND BRIEF DESCRIPTION OF THE INVENTION

An object of the present invention is to reduce or even to eliminate above-mentioned problems appearing in the prior art.

An object of the present invention is to provide a solution, with which the efficiency of the droplet separator, which is in connection with the flooded evaporator of the refrigerating machinery, is improved.

An object of the present invention is to provide a solution, with which the flooded evaporator and the droplet separator form an entity, which is functionally efficient, economical, small when it comes to size and reliable when it comes to functioning.

An object of the present invention is to provide a new even more efficient manner to separate refrigerant droplets gravitationally.

An object of the present invention is to find such a structure for a gravitational droplet separator, where the droplet separating capacity in relation to the size of the vessel is as advantageous as possible. The object is also for the flow not to generate a large loss of pressure, since this impairs the efficiency of the system.

In order to realize among others the objects mentioned above, the present invention is characterised by what is presented in the characterising parts of the enclosed independent claims.

The embodiment examples and advantages mentioned in this text relate, where applicable, to both the system and the method according to the invention, even if this is not always specifically mentioned.

In this context the refrigerant refers to the circulating medium, i.e. working medium, of vaporization processes used in refrigerating machineries. Such refrigerants are for example ammonia, carbon dioxide and CFC agents.

A typical apparatus for separating droplets from vaporized refrigerant comprises a droplet separator, which has a separation vessel having an elongated shape, through which separation vessel the refrigerant is arranged to flow. In the separation vessel the droplets are separated from the vaporized refrigerant gravitationally. The apparatus includes connections for leading the vaporized refrigerant coming from the evaporator to the first end of the separation vessel and connections for leading the vaporized refrigerant out of the droplet separator from the second end of the separation vessel. The apparatus also includes connections for leading the liquid refrigerant from the separation vessel to the evaporator. In a typical apparatus a partition plate has been arranged in the separation vessel, which partition plate divides the separation space into two separation parts. The vaporized refrigerant and the droplets to be separated amongst it are arranged to flow first on the first side of the partition plate through the first separation space. Typically at least the largest droplets separate already in the first separation space. Thereafter the vaporized refrigerant and the droplets still amongst it are arranged to transfer to the second side of the partition plate, i.e. to the second separation space. On this second side of the partition plate the refrigerant is then arranged to flow through the second separation space. More droplets separate from the vaporized refrigerant as it flows through the second separation space.

The droplet separator according to the invention can be divided also into more than two separation parts with the aid of one or more partition plates.

It has now thus surprisingly been found that one and the same separation vessel of a gravitational droplet separator can, by means of one or more simple plates, be divided into two or more separation spaces. Thus the vaporized refrigerant flowing in a separation vessel of a certain volume can be made to flow a longer distance and over a longer time. This substantially boosts the droplet separating capacity of the droplet separator.

With the aid of the invention a more effective utilization especially of the flow cross-section of the droplet separator is achieved.

With the aid of the invention the mass of the droplets, which have passed through the droplet separator, can be made to be a fraction in comparison to prior art solutions, when the size of the vessel and the circumstances are the same. At the same time it is also possible to reduce the loss of pressure in the droplet separator.

It is possible to functionally link the droplet separator according to the invention to an evaporator, i.e. a heat exchanger, where refrigerant is vaporized. It is possible for the apparatus according to the invention to also comprise a refrigerating machinery and necessary connections for leading the vaporized refrigerant from the droplet separator to the compressor of the refrigerating machinery and for leading the at least partly liquid refrigerant from the high-pressure part of the refrigerating machinery to the droplet separator.

The main parts of a typical refrigerating machinery, in which an apparatus according to the invention can be used, are in addition to the evaporator and the droplet separator a compressor, a condenser, an expansion or float valve and a pipe system, which connects the parts. The evaporation process is divided into a low-pressure and a high-pressure part. The low-pressure part includes an evaporator and droplet separator with pipe systems, the high-pressure part includes a condenser and an expansion or float valve with pipe systems. Refrigerating machineries are known as such, and they will not be discussed here in further detail.

In an embodiment of the invention the apparatus comprises connections for leading at least partly liquid refrigerant from the refrigerating machinery to the first end of the separation vessel of the droplet separator.

In an embodiment of the invention the partition plate is arranged mainly horizontal. The partition plate can also be arranged somewhat inclined, for example 1 - 10 % in relation to the horizontal plane, whereby liquid, which has separated onto it, automatically flows away. Openings can be arranged into the partition plate or between the partition plate and the inner walls of the collection vessel for leading liquid to the bottom of the collection vessel.

In a typical apparatus according to the invention the separation vessel has an elongated shape and the partition plate is arranged parallel with the separation vessel. Thereby the connections in the first and second end of the separation vessel are placed in the same end of the separation vessel, but on different sides of the partition plate. In other words, thereby the first end of the first separation space and the second end of the second separation space are in the same end of the separation vessel of the droplet separator. The fact that the necessary connections are in the same end of the droplet separator often facilitates the installation of the device. According to the invention the elongated separation vessel is installed mainly in a horizontal position. Thereby, if the partition plate is mainly horizontal, it divides the separation vessel into two mainly horizontal separation parts. The elongated separation vessel may also be placed in an inclined position. In an embodiment of the invention the first and second separation space are approximately equally large when it comes to volume. In other words the partition plate is placed approximately in the middle of the separation space. The volume of the first and the second separation space may differ by for example less than 10 % or less than 20 %. In an embodiment of the invention refrigerant is led approximately the same distance in the first and the second separation space.
In an embodiment of the invention the partition plate is in its one end closed and in its other end perforated. Through the openings the vaporized refrigerant is led from one side of the partition plate to the other, i.e. from the first separation space to the second separation space. Typically the partition plate is closed in that end, where the inlet connections for the vaporized refrigerant open in the first separation space, i.e. in the first end of the separation vessel. Typically, on the second side of the partition plate, in the second separation space, this same closed end of the partition plate delimits the second end of the separation vessel, i.e. the end from where the connections for leading refrigerant to the refrigerating machinery start.

In an embodiment of the invention a baffle plate is attached on top of the perforated part of the partition plate in the second separation space, which baffle plate is directed first perpendicularly against the direction of the perforated part and then bent towards the second end of the separation vessel. The baffle plate divides the second separation space into two smaller parts. The object of the baffle plate is to turn the flow of refrigerant, which has flowed into the second separation space, in a controlled manner toward the second end of the separation vessel. In an embodiment the baffle plate is in the middle of the perforated part of the partition plate, in such a manner that at least 30 % of the perforation remains on each side of the baffle plate.

The solution according to the invention can be carried out with various heat exchangers, such as with plate heat exchangers or pipe heat exchangers. In an embodiment a heat exchanger refers to a plate heat exchanger according to the so-called Plate & Shell ™ technology developed by the applicant, which plate heat exchanger comprises a stack of plates formed by heat exchanger plates and a shell surrounding it. The stack of plates is formed of several plate pairs. Each plate pair is formed of two heat exchanger plates, which are welded together at least at their outer periphery. Each heat exchanger plate has at least two first openings for the flow of the first heat exchange medium. Adjacent plate pairs are fastened together by welding or by otherwise combining the first openings of two adjacent plate pairs to each other. Thus, the first heat exchange medium can flow from a plate pair to another via the first openings. The second heat exchange medium is arranged to flow inside the shell in the spaces between the plate pairs.

Inlet and outlet connections for the first as well as for the second heat exchange medium have been arranged through the shell of the Plate & Shell ™ plate heat exchanger. The inlet and outlet connection of the first heat exchange medium has been arranged in connection with the inner parts of the stack of plates, i.e. with the inner parts of the plate pairs. The primary circuit of the plate heat exchanger is thus formed between the inlet and outlet connection of the first heat exchange medium, inside the plate pairs. The inlet and outlet connection of the second heat exchange medium has been arranged in connection with the inside of the shell, i.e. with the outside of the stack of plates, i.e. with the outer sides of the plate pairs. In other words, the secondary circuit of the plate heat exchanger is formed between the inlet and outlet connection of the second heat exchange medium, inside the shell, in the spaces between the plate pairs. Typically, the primary and secondary circuits are separate from each other, i.e. the first heat exchange medium flowing in the inner part of the stack of plates cannot get mixed with the second heat exchange medium flowing in the shell, i.e. outside the stack of plates. Thus, the first primary heat exchange medium flows in every other space between two plates and the second secondary heat exchange medium flows in every other space between two plates of a plate heat exchanger according to the invention.

### BRIEF DESCRIPTION OF THE FIGURES

The invention is described in more detail below with reference to the enclosed schematic drawing, in which
- Figure 1: shows a principle chart of a refrigerating machinery of the type in question,
- Figure 2: shows a flooded evaporator and a droplet separator as seen from the side and partly in a cut view,
- Figure 3: shows the solution of Figure 2 in an end view,
- Figure 4: shows a cross-section of a droplet separator according to the invention as seen from the side,
- Figure 5: shows a cross-section of the solution of Figure 4 in an end view, and
- Figure 6: shows a magnified view of a detail of the droplet separator of Figure 4.

### DETAILED DESCRIPTION OF THE EXAMPLES OF THE FIGURES

For the sake of clarity, the same reference numbers have been used for parts corresponding to each other in different examples.

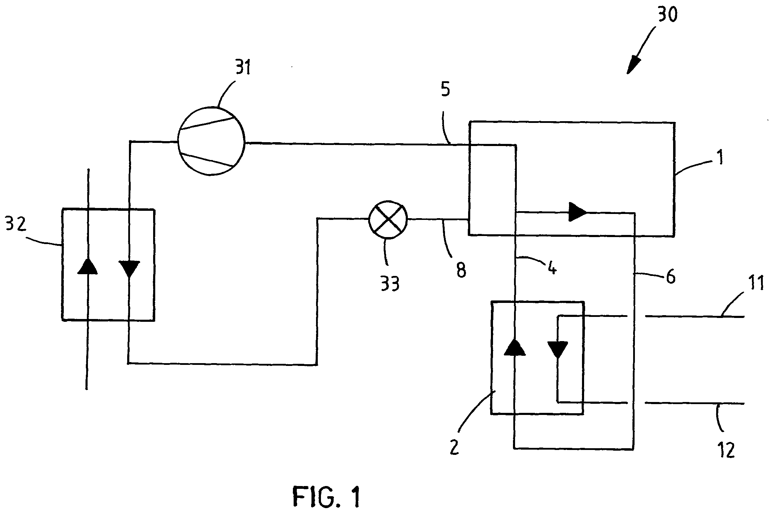

Figure 1 shows an example of a principle chart of a refrigerating machinery 30 according to the invention. The main parts of the refrigerating machinery 30 are an evaporator 2 and a droplet separator 1 in connection with it, a compressor 31, a condenser 32, an expansion or float valve 33 and a pipe system, which connects the parts. The evaporation process is divided into a low-pressure and a high-pressure part. The low-pressure part includes an evaporator 2 and droplet separator 1 with pipe systems, the high-pressure part includes a condenser 32 and an expansion or float valve 33 with pipe systems.

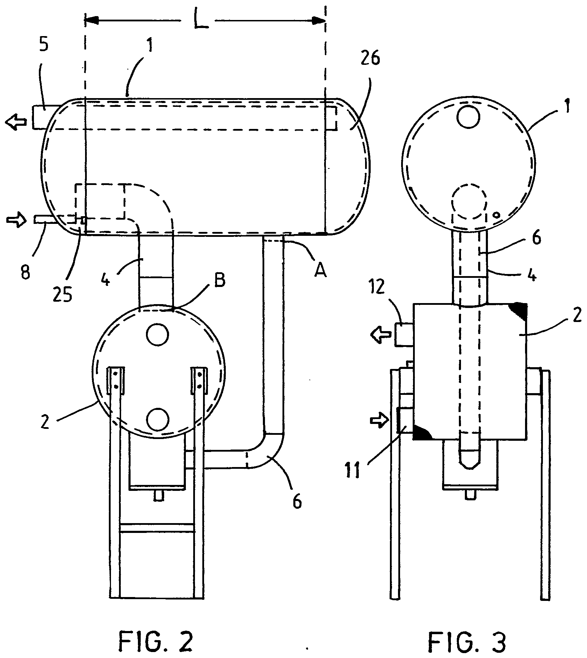

Figures 2 and 3 show a typical technical solution, which is presently in use, where a flooded evaporator 2, i.e. a plate heat exchanger, and a droplet separator 1 together form a functional entity. The refrigerant, typically ammonia, which comes from the high-pressure part of the refrigerating machinery 30, is fed from the expansion valve or float valve 33 through a pipe 8 into the droplet separator 1 as a mixture of liquid and vapour. The refrigerant which is in the liquid phase circulates through the circulating pipe 6 to the flooded evaporator. The flow medium which flows on the second side of the heat exchanger 2, and which has a higher temperature, cools down and the refrigerant is partly evaporated. The warm flow medium is fed to the heat exchanger 2 from the inlet connection 11 and it exits through the outlet connection 12. The vaporized refrigerant rises through the pipe 4 to the first end 25 of the droplet separator. The saturated vapour is suctioned to the compressor through the pipe 5 from the second end 26 of the droplet separator. Altogether the length of the journey the vaporized refrigerant has to travel in the droplet separator 1 is equal to the largest separation length L. The quantity of the refrigerant is usually adjusted so that it is in the circulation pipe 6 at the level A of the lower edge of the droplet separator, and on the side of the heat exchanger as much lower as the loss of pressure caused by the flow makes it, typically at the level B of the higher edge of the exchanger.

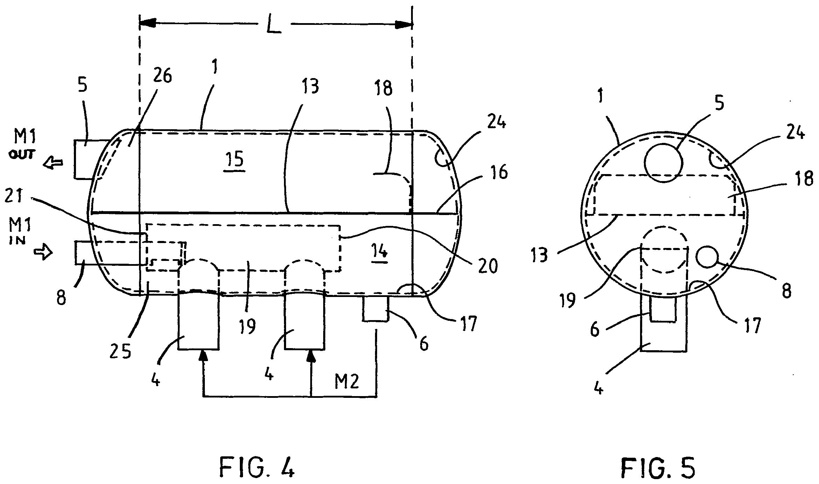

Figures 4 - 6 show only a droplet separator 1 according to the invention. The heat exchanger, which is connected to the droplet separator, can be exactly like the flooded evaporator 2 shown in Figures 2 - 4. Even several, for example 2 - 5, separate heat exchangers 2 can be connected to the droplet separator 1 in order to improve the vaporizing capacity.

In the structures according to the invention in Figures 4 - 6 the vessel 1 of the droplet separator is divided with a mainly horizontal partition plate 13 into a first separation space 14 and a second separation space 15. The first separation space 14 is in the bottom part of the vessel 1 and the second separation space 15 in the top part of the vessel 1. The separation spaces 14 and 15 are approximately equally large when it comes to volume. The left part of the partition plate 13 is closed. In the right end of the partition plate 13 a part of it is made of perforated plate 16. In the example of the Figure the length of the part made of perforated plate 16 is about 20 % of the length of the entire partition plate 13. In the perforated part of the partition plate 16 there can be openings on for example 10 - 40 % of its surface area. The refrigerant (M1 in) coming from the high-pressure part of the refrigerating machinery is fed to the left edge 25 of the first separation space 14 of the droplet separator from the inlet connection 8. The mixture of vapour and liquid droplets developed at the evaporator 2 is fed from two pipes 4 to a collector pipe 19, which at its right end 20 is closed and at its left end open. Two pipes 4 can be seen in Figure 3, to both of which can be attached their own evaporator 2. From the left end 21 of the collector pipe the mixture of vapour and liquid droplets is carried to the left edge 25 of the first separation space 14. From the left edge 25 of the first separation space 14 the mixture of vapour and liquid droplets of refrigerant flows to the entire separation space 14 of the vessel. The droplets have approximately the entire separation length L to fall to the bottom 17 of the vessel. The largest droplets immediately fall to the bottom 17 of the vessel. Through the pipe 6 refrigerant is led from the bottom 17 to one or more evaporators 2 (See Fig. 2). Only a small part of the droplets transfer with the suction gas through the perforated plate 16 to the top of the vessel, i.e. to the second separation space 15. In the second separation space 15 also the rest of the droplets have approximately the entire separation length L to fall to the partition plate 13 and onwards back into the first separation space 14. Altogether the journey the vaporized refrigerant has to travel in the droplet separator 1 is approximately twice the length of L. Only very small droplets are carried to the suction opening 5 (M1 out) in the left end 26 of the second separation space. A baffle plate 18 is placed on top of the perforated part 16 of the partition plate, which baffle plate is directed first perpendicularly upwards and then bent towards the suction opening 5. The object of the baffle plate 18 is to stop the flow from necking to the top part of the vessel and thus ensure the even division of the flow in the second separation space 15.

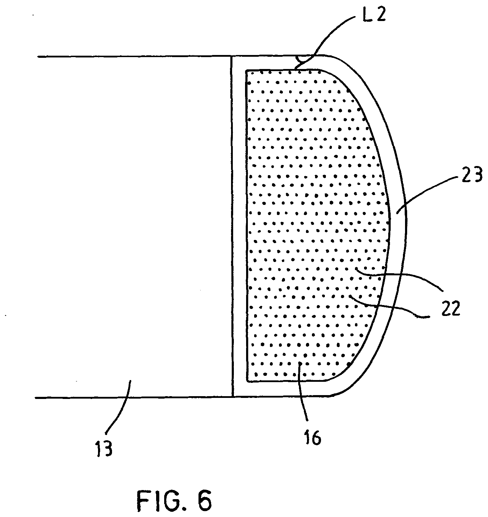

Figure 6 shows a magnified view of the right end of the partition plate 13 as seen from above. The left end of the plate 13 is closed plate. The right end of the plate 13 is formed to be perforated plate 16. In the perforated plate 16, the diameter of the holes 22 is e.g. 3-5 mm. Around the perforated part 16 of the plate there is however a closed edge 23, meant to be against the inner wall 24 of the vessel 1. The object of the edge 23 is to cut off the tendency of the flow to follow the inner wall 24 of the vessel. The width L2 of the edge can be for example 25 - 60 mm.

The partition plate 13 can be inclined in relation to the horizontal plane by for example 1 - 10 %. Thus the droplets, which have fallen onto it, flow away. A suitably sized gap can be arranged between the partition plate 13 and the inner wall 24 of the vessel 1, from which gap the droplets can flow to below the plate.

Only one advantageous embodiment of the invention is shown in the Figures. The Figures do not separately show matters that are irrelevant in view of the main idea of the invention, known as such or obvious as such for a person skilled in the art. It is apparent to a person skilled in the art that the invention is not limited exclusively to the examples described above, but that the invention can vary within the scope of the claims presented below. The dependent claims present some possible embodiments of the invention, and they are not to be considered to restrict the scope of protection of the invention as such.

## Claims

1. Apparatus for separating droplets from vaporized refrigerant, comprising
- a droplet separator, which comprises a separation vessel (1) having an elongated shape mainly installed in a horizontal or an inclined position, through which separation vessel (1) the refrigerant is arranged to flow, and in which separation vessel the droplets separate from the vaporized refrigerant gravitationally,
- connections (4, 19) for leading the vaporized refrigerant coming from the evaporator to a first end (25) of the separation vessel,
- connections (5) for leading the vaporized refrigerant out of the droplet separator from a second end (26) of the separation vessel,
- connections (6) for leading liquid refrigerant from the separation vessel (1) to the evaporator (2),
whereby a partition plate (13) has been arranged in the separation vessel (1), which partition plate divides the separation space into two separation parts (14, 15) in such a way that the vaporized refrigerant is arranged
- to pass firstly through a first separation space (14) on the first side of the partition plate (13),
- then to transfer to the second side of the partition plate (13), i.e. to a second separation space (15),
- then to pass through the second separation space (15) on the second side of the partition plate (13),
**characterized in that** the partition plate is arranged parallel to the separation vessel, whereby the connections (5, 8) of the first (25) and second end (26) of the separation vessel have been situated in the same end of the separation vessel (1), on different sides of the partition plate (13).

2. Apparatus according to claim 1, **characterized in that** it further comprises
- an evaporator (2), which is arranged to vaporize the refrigerant.

3. Apparatus according to claim 1 or 2, **characterized in that** it further comprises
- a refrigerating machinery and
- connections (5) for leading the vaporized refrigerant from the droplet separator to a compressor (31) of the refrigerating machinery and
- connections (8) for leading at least partly liquid refrigerant from a high-pressure part of the refrigerating machinery (30) to the droplet separator (1).

4. Apparatus according to any of the preceding claims, **characterized in that** the partition plate (13) is arranged mainly horizontal.

5. Apparatus according to any of the preceding claims, **characterized in that** the first and second separation space (14, 15) have an approximately equally large volume.

6. Apparatus according to any of the preceding claims, **characterized in that** the partition plate (13) is in its one end closed and in its other end (16) perforated, in order to lead the vaporized refrigerant from one side of the partition plate (13) to the other.

7. Apparatus according to claim 6, **characterized in that** a baffle plate (18) is placed in the second separation space, on top of the perforated part (16) of the partition plate, which baffle plate is directed first perpendicularly against the direction of the perforated part (16) and then bent towards the second end (26) of the separation vessel.

8. Apparatus according to claim 6, **characterized in that** the partition plate is closed **in that** end, where the inlet connections for the vaporized refrigerant open in the first separation space, i.e. in the first end of the separation vessel.

9. Apparatus according to claim 3, **characterized in that** it comprises connections (8) for leading the at least partly liquid refrigerant from the refrigerating machinery to the first end (25) of the separation vessel of the droplet separator.

10. Method for separating droplets from vaporized refrigerant, the method comprising
- leading vaporized refrigerant from an evaporator (2) to a first end (25) of an elongated, mainly installed in a horizontal or inclined position, separation vessel (1) of a droplet separator,
- leading the refrigerant through the separation vessel (1), and simultaneously separating droplets gravitationally in the separation vessel from the vaporized refrigerant,
- leading the vaporized refrigerant out of the droplet separator (1) from a second end (26) of the separation vessel,
- leading liquid refrigerant from the separation vessel (1) to the evaporator (2),
whereby a partition plate (13) has been arranged in the separation vessel (1), which partition plate divides the separation space into two separation parts (14, 15), whereby the method comprises
- firstly leading the refrigerant through a first separation space (14) on a first side of the partition plate (13),
- then leading the refrigerant to a second side of the partition plate (13), i.e. to a second separation space (15),
- then leading the refrigerant through the second separation space (15) on a second side of the partition plate (13),
**characterized in that** the partition plate is arranged parallel to the separation vessel, whereby the vaporized refrigerant is led in and led out from the separation vessel in the same end of the elongated separation vessel (1), on different sides of the partition plate (13).

11. Method according to claim 10, **characterized in that** it further comprises
- vaporizing the refrigerant in the evaporator (2).

12. Method according to claim 10 or 11, **characterized in that** it further comprises
- leading the vaporized refrigerant from the droplet separator (1) to a compressor (31) of a refrigerating machinery (30),
- leading at least partly liquid refrigerant from a high-pressure part of the refrigerating machinery (30) to the droplet separator.

13. Method according to any of the preceding claim 10 - 12, **characterized in that** the refrigerant is led approximately the same distance in the first (14) and the second separation space (15).

14. Method according to any of the preceding claims 10 - 13, **characterized in that** refrigerant is led from one side of the partition plate (13) to the other side through openings (22) arranged in the second end (16) of the partition plate.

15. Method according to claim 12, **characterized in that** at least partly liquid refrigerant is led from the high-pressure part of the refrigerating machinery (30) to the first end (25) of the separation vessel of the droplet separator.

## Patentansprüche

1. Vorrichtung zum Trennen von Tröpfchen von verdampftem Kältemittel, umfassend
- einen Tröpfchentrenner, der einen Trennbehälter (1) mit einer gestreckten Form, hauptsächlich in einer horizontalen oder geneigten Position installiert, umfasst, wobei das Kühlmittel eingerichtet ist, durch diesen Trennbehälter (1) zu fließen, und wobei sich in dem Trennbehälter die Tröpfchen gravitativ von dem verdampften Kühlmittel trennen,
- Verbindungen (4,19) zum Führen des von dem Verdampfer kommenden verdampften Kühlmittels zu einem ersten Ende (25) des Trennbehälters,
- Verbindungen (5) zum Führen des verdampften Kühlmittels aus dem Tröpfchentrenner von einem zweiten Ende (26) des Trennbehälters,
- Verbindungen (6) zum Führen des flüssigen Kühlmittels von dem Trennbehälter (1) zu dem Verdampfer (2),
wobei eine Teilplatte (13) in dem Trennbehälter (1) eingerichtet wurde, wobei die Teilplatte den Trennraum in zwei getrennte Bereiche (14, 15) aufteilt, so dass das verdampfte Kühlmittel eingerichtet ist
- zuerst durch einen ersten Trennraum (14), auf der ersten Seite der Teilplatte (13), zu passieren,
- dann zu der zweiten Seite der Teilplatte (13), das heißt in einen zweiten Trennraum (15), zu transferieren,
- dann durch den zweiten Trennraum (15), auf der zweiten Seite der Teilplatte (13), zu passieren,
**dadurch gekennzeichnet, dass** die Teilplatte parallel zu dem Trennbehälter angeordnet ist, wobei die Verbindungen (5, 8) des ersten (25) und zweiten Endes (26) des Trennbehälters an dem selben Ende des Trennbehälters (1), auf verschiedenen Seiten der Teilplatte (13), angeordnet wurden.

2. Vorrichtung nach Anspruch 1, **dadurch gekennzeichnet, dass** sie zusätzlich
- einen Verdampfer (2), welcher eingerichtet ist, das Kühlmittel zu verdampfen,
umfasst.

3. Vorrichtung nach Anspruch 1 oder 2, **dadurch gekennzeichnet, dass** sie zusätzlich
- eine Kühlmaschine und
- Verbindungen (5) zum Führen des verdampften Kühlmittels von dem Tröpfchentrenner zu einem Kompressor (31) der Kühlmaschine und
- Verbindungen (8) zum Führen des zumindest teilweise flüssigen Kühlmittels von einem Hochdruckteil der Kühlmaschine (30) zu dem Tröpfchentrenner (1)
umfasst.

4. Verfahren nach einem der vorhergehenden Ansprüche, **dadurch gekennzeichnet, dass** die Teilplatte (13) hauptsächlich horizontal angeordnet ist.

5. Vorrichtung nach einem der vorhergehenden Ansprüche, **dadurch gekennzeichnet, dass** der erste und zweite Trennraum (14,15) ein annähernd gleich großes Volumen aufweisen.

6. Vorrichtung nach einem der vorhergehenden Ansprüche, **dadurch gekennzeichnet, dass** die Teilplatte (13) an ihrem einen Ende geschlossen ist, und an ihrem anderen Ende (16) perforiert ist, um das verdampfte Kühlmittel von einer Seite der Teilplatte (13) zu der anderen zu führen.

7. Vorrichtung nach Anspruch 6, **dadurch gekennzeichnet, dass** eine Prallplatte (18) in den zweiten Trennraum, oberhalb des perforierten Teils (16) der Teilplatte, platziert ist, wobei die Prallplatte zuerst senkrecht entgegen der Richtung des perforierten Teils (16) gerichtet ist und dann in Richtung des zweiten Endes (26) des Trennbehälters gebogen ist.

8. Vorrichtung nach Anspruch 6, **dadurch gekennzeichnet, dass** die Teilplatte in dem Ende, wo sich die Einlassverbindungen für das verdampfte Kühlmittel in den ersten Trennraum öffnen, das heißt in dem ersten Ende des Trennbehälters, geschlossen ist.

9. Vorrichtung nach Anspruch 3, **dadurch gekennzeichnet, dass** sie Verbindungen (8) zum Führen des zumindest teilweise flüssigen Kühlmittels von der Kühlmaschine zu dem ersten Ende (25) des Trennbehälters des Tröpfchentrenners umfasst.

10. Verfahren zum Trennen von Tröpfchen von verdampften Kühlmittel, wobei das Verfahren
- Führen von verdampften Kühlmittel von einem Verdampfer (2) zu einem ersten Ende (25) eines gestreckten, hauptsächlich in einer horizontalen oder geneigten Position installierten Trennbehälter (1) eines Tröpfchentrenners,
- Führen des Kühlmittels durch den Trennbehälter (1) und gleichzeitig gravitatives Trennen von Tröpfchen in dem Trennbehälter von dem verdampften Kühlmittel,
- Führen des verdampften Kühlmittels aus dem Tropfentrenner (1) aus einem zweiten Ende (26) des Trennbehälters,
- Führen von flüssigem Kühlmittel von dem Trennbehälter (1) zu dem Verdampfer (2),
umfasst,
wobei eine Teilplatte (13) in dem Trennbehälter (1) angeordnet wurde, wobei die Teilplatte den Trennraum in zwei getrennte Teile (14, 15) teilt, wobei das Verfahren
- zuerst Führen des Kühlmittels durch einen ersten Trennraum (14) auf einer ersten Seite der Teilplatte (13),
- dann Führen des Kühlmittels zu einer zweiten Seite der Teilplatte (13), das heißt zu einem zweiten Trennraum (15),
- dann Führen des Kühlmittels durch den zweiten Trennraum (15) auf einer zweiten Seite der Trennplatte (13), umfasst,
**dadurch gekennzeichnet, dass** die Trennplatte parallel zu dem Trennbehälter angeordnet ist, wobei das verdampfte Kühlmittel in den und aus dem Trennbehälter, an dem selben Ende des gestreckten Trennbehälters (1), auf verschiedenen Seiten der Trennplatte (13), geführt wird.

11. Verfahren nach Anspruch 10, **dadurch gekennzeichnet, dass** es zusätzlich
- Verdampfen des Kühlmittels in dem Verdampfer (2) umfasst.

12. Verfahren nach Anspruch 10 oder 11, **dadurch gekennzeichnet, dass** es zusätzlich
- Führen des verdampften Kühlmittels von dem Tröpfchentrenner (1) zu einem Kompressor (31) der Kühlmaschine (30),
- Führen des zumindest teilweise flüssigen Kühlmittels von einem Hochdruckteil der Kühlmaschine (30) zu dem Tröpfchentrenner (1)
umfasst.

13. Verfahren nach einem der vorhergehenden Ansprüche 10-12, **dadurch gekennzeichnet, dass** das Kühlmittel ungefähr die gleiche Entfernung in dem ersten (14) und dem zweiten Trennraum (15) geführt wird.

14. Verfahren nach einem der vorhergehenden Ansprüche 10 - 13, **dadurch gekennzeichnet, dass** das Kühlmittel von einer Seite der Trennplatte (13) zu der anderen Seite durch Öffnungen (22), welche in dem zweiten Ende (16) der Teilplatte angeordnet sind, geführt wird.

15. Verfahren nach Anspruch 12, **dadurch gekennzeichnet, dass** zumindest teilweise flüssiges Kühlmittel von dem Hochdruckteil der Kühlmaschine (30) zu dem ersten Ende (25) des Trennbehälters des Tröpfchentrenners geführt wird.

## Revendications

1. Appareil pour la séparation de gouttelettes d'un fluide frigorigène vaporisé, comprenant
- un séparateur de gouttelettes, qui comprend une cuve de séparation (1) ayant une forme allongée installée principalement dans une position horizontale ou inclinée, cuve de séparation (1) à travers laquelle le fluide frigorigène est agencé pour circuler, et cuve de séparation dans laquelle les gouttelettes se séparent du fluide frigorigène vaporisé par gravitation,
- des raccordements (4, 19) pour amener le fluide frigorigène vaporisé provenant de l'évaporateur à une première extrémité (25) de la cuve de séparation,
- des raccordements (5) pour amener le fluide frigorigène vaporisé hors du séparateur de gouttelettes depuis une seconde extrémité (26) de la cuve de séparation,
- des raccordements (6) pour amener un fluide frigorigène liquide de la cuve de séparation (1) à l'évaporateur (2),
moyennant quoi une plaque de division (13) a été agencée dans la cuve de séparation (1), laquelle plaque de division divise l'espace de séparation en deux parties de séparation (14, 15) de manière à ce que le fluide frigorigène vaporisé soit agencé
- pour passer d'abord à travers un premier espace de séparation (14) sur le premier côté de la plaque de division (13),
- puis pour se transférer au second côté de la plaque de division (13), c'est-à-dire jusqu'à un second espace de séparation (15),
- puis pour passer à travers le second espace de séparation (15) sur le second côté de la plaque de division (13),
**caractérisé en ce que** la plaque de division est agencée parallèle à la cuve de séparation, moyennant quoi les raccordements (5, 8) de la première (25) et de la seconde (26) extrémité de la cuve de séparation ont été situés dans la même extrémité de la cuve de séparation (1), sur des côtés différents de la plaque de division (13).

2. Appareil selon la revendication 1, **caractérisé en ce qu'**il comprend en outre
- un évaporateur (2), qui est agencé pour vaporiser le fluide frigorigène.

3. Appareil selon la revendication 1 ou 2, **caractérisé en ce qu'**il comprend en outre
- une machine de réfrigération et
- des raccordements (5) pour amener le fluide frigorigène vaporisé du séparateur de gouttelettes à un compresseur (31) de la machine de réfrigération et
- des raccordements (8) pour amener un fluide frigorigène au moins en partie liquide d'une partie haute pression de la machine de réfrigération (30) au séparateur de gouttelettes (1).

4. Appareil selon l'une quelconque des revendications précédentes, **caractérisé en ce que** la plaque de division (13) est agencée principalement horizontalement.

5. Appareil selon l'une quelconque des revendications précédentes, **caractérisé en ce que** le premier et le second espace de séparation (14, 15) ont un volume approximativement aussi grand l'un l'autre.

6. Appareil selon l'une quelconque des revendications précédentes, **caractérisé en ce que** la plaque de division (13) est dans sa première extrémité fermée et dans son autre extrémité (16) perforée, afin d'amener le fluide frigorigène vaporisé d'un côté de la plaque de division (13) à l'autre.

7. Appareil selon la revendication 6, **caractérisé en ce qu'**une plaque de chicane (18) est placée dans le second espace de séparation, par-dessus la partie perforée (16) de la plaque de division, laquelle plaque de chicane est dirigée d'abord perpendiculairement contre la direction de la partie perforée (16) puis coudée vers la seconde extrémité (26) de la cuve de séparation.

8. Appareil selon la revendication 6, **caractérisé en ce que** la plaque de division est fermée dans l'extrémité où les raccordements d'entrée pour le fluide frigorigène vaporisé s'ouvrent dans le premier espace de séparation, c'est-à-dire dans la première extrémité de la cuve de séparation.

9. Appareil selon la revendication 3, **caractérisé en ce qu'**il comprend des raccordements (8) pour amener le fluide frigorigène au moins en partie liquide de la machine de réfrigération à la première extrémité (25) de la cuve de séparation du séparateur de gouttelettes.

10. Procédé pour la séparation de gouttelettes d'un fluide frigorigène vaporisé, le procédé comprenant
- l'amenée d'un fluide frigorigène vaporisé d'un évaporateur (2) à une première extrémité (25) d'une cuve de séparation (1) allongée, installée principalement dans une position horizontale ou inclinée d'un séparateur de gouttelettes,
- l'amenée du fluide frigorigène à travers la cuve de séparation (1), et la séparation simultanée de gouttelettes par gravitation dans la cuve de séparation à partir du fluide frigorigène vaporisé,
- l'amenée du fluide frigorigène vaporisé hors du séparateur de gouttelettes (1) depuis une seconde extrémité (26) de la cuve de séparation,
- l'amenée de fluide frigorigène liquide de la cuve de séparation (1) à l'évaporateur (2),
moyennant quoi une plaque de division (13) a été agencée dans la cuve de séparation (1), laquelle plaque de division divise l'espace de séparation en deux parties de séparation (14, 15), moyennant quoi le procédé comprend
- d'abord l'amenée du fluide frigorigène à travers un premier espace de séparation (14) sur un premier côté de la plaque de division (13),
- puis l'amenée du fluide frigorigène jusqu'à un second côté de la plaque de division (13), c'est-à-dire jusqu'à un second espace de séparation (15),
- puis l'amenée du fluide frigorigène à travers le second espace de séparation (15) sur un second côté de la plaque de division (13),
**caractérisé en ce que** la plaque de division est agencée parallèle à la cuve de séparation, moyennant quoi le fluide frigorigène vaporisé est amené dans et hors de la cuve de séparation dans la même extrémité de la cuve de séparation (1) allongée, sur des côtés différents de la plaque de division (13).

11. Procédé selon la revendication 10, **caractérisé en ce qu'**il comprend en outre
- la vaporisation du fluide frigorigène dans l'évaporateur (2).

12. Procédé selon la revendication 10 ou 11, **caractérisé en ce qu'**il comprend en outre
- l'amenée du fluide frigorigène vaporisé du séparateur de gouttelettes (1) à un compresseur (31) d'une machine de réfrigération (30),
- l'amenée d'un fluide frigorigène au moins en partie liquide d'une partie haute pression de la machine de réfrigération (30) au séparateur de gouttelettes.

13. Procédé selon l'une quelconque des revendications 10 à 12 précédentes, **caractérisé en ce que** le fluide frigorigène est amené approximativement sur la même distance dans le premier (14) et le second (15) espace de séparation.

14. Procédé selon l'une quelconque des revendications 10 à 13 précédentes, **caractérisé en ce que** le fluide frigorigène est amené depuis un côté de la plaque de division (13) jusqu'à l'autre côté à travers des ouvertures (22) agencées dans la seconde extrémité (16) de la plaque de division.

15. Procédé selon la revendication 12, **caractérisé en ce qu'**un fluide frigorigène au moins en partie liquide est amené depuis la partie haute pression de la machine de réfrigération (30) jusqu'à la première extrémité (25) de la cuve de séparation du séparateur de gouttelettes.
